# EUROPÄISCHE PATENTANMELDUNG

(11) **EP 4 130 700 A2**
(43) Veröffentlichungstag der Anmeldung: **08.02.2023**
(21) Anmeldenummer: 22187573.5
(22) Anmeldetag: 28.07.2022
(51) Int. Cl.: G01M 3/16, E04D 13/00, E03F 5/04, G01M 3/00, G01M 3/18

(54) **VERFAHREN ZUM FESTSTELLEN DER ANWESENHEIT VON WASSER**

(30) Priorität: 03.08.2021 AT 506312021
(71) Anmelder: Taferner, Marko, 9061 Wölfnitz (AT)
(72) Erfinder: Taferner, Marko, 9061 Wölfnitz (AT)
(74) Vertreter: Beer & Partner Patentanwälte KG

(57) **Zusammenfassung**

Bei einem Verfahren zum Feststellen der Anwesenheit von Wasser oder zusätzlichem Wasser, das wegen einer Undichtigkeit vorliegt, werden folgende Schritte ausgeführt:
- Anbringen von wenigstens einem Paar von Elektroden (3, 5) an/in einem Gegenstand, an/in dem Anwesenheit von Wasser festzustellen ist,
- Anlegen einer elektrischen Spannung zwischen den Elektroden (3, 5),
- Prüfen, ob zwischen den Elektroden (3, 5) elektrischer Strom oder gegenüber einem Grundstrom erhöhter elektrischer Strom fließt und
- bei fließendem Strom Feststellen der Anwesenheit von Wasser.

Beim Durchführen des Verfahrens werden wenigstens zwei Elektroden (3, 5) verwendet, wobei eine Elektrode (5) eine Erdung sein kann. Die Elektroden (3, 5) sind mit Abstand voneinander angeordnet. An die Elektroden (3, 5) wird von einem Gerät (2) Gleich- oder Wechselspannung angelegt. Das Gerät (2) erfasst einen der Stärke des zwischen den Elektroden (3, 5) fließenden Stroms entsprechenden Messwert.

## Beschreibung

Die Erfindung betrifft ein Verfahren zum Feststellen der Anwesenheit von Wasser mit den Merkmalen des einleitenden Teils von Anspruch 1.

Unerwünschte Anwesenheit von Wasser kann im Bereich flüssigkeitsgefüllter Rohrleitungen, wie beispielsweise bei Leitungen in Abwasser-, Trinkwasser- und Heizungssystemen, auftreten. Weiters kann unerwünschte Anwesenheit von Wasser im Bereich von Swimmingpools (Indoor- und Outdoorpools), Schwimmteichen, erdverlegten Behältern, Schächten, Ölabscheidern sowie Kläranlagen etc. vorkommen.

Auch im Hausbereich kann unerwünschte Anwesenheit von Wasser vorkommen, sodass es erforderlich ist, Hausinstallationen, Wasser- und Abwasserleitungen, Heizungssysteme, Kellerbereiche, Flachdächer und Holzleimbinder zu überwachen. Vorteilhaft ist, wenn bei Hausinstallationen allfällige Lecks, welche die unerwünschte Anwesenheit von Wasser verursachen, geortet werden können.

Schließlich ist es von Bedeutung, Staumauern bei Talsperren zu überwachen, um unerwünschte Verluste von Wasser zu erkennen und Abhilfe schaffen zu können.

Verfahren und Anordnungen zum Feststellen von Wasser sind bekannt.

Bei WO 2009/023956 A1 sollen Leckstellen in einer Folie ("membrane") eines Daches ermittelt werden. Auf der Folie des horizontalen Daches sind blanke elektrische Leiter gitterartig mit isolierten Kreuzungspunkten verlegt. Spannung wird zwischen der Unterkonstruktion des Daches und den Leitern angelegt. Es wird mit Relais von Leiter zu Leiter geprüft, ob Strom fließt. Wenn an einer Stelle Strom fließt, werden die anderen Leiter geerdet.

Gemäß WO 2017/011871 A1 sollen Lecks in einer Flüssigkeit fördernden Leitung festgestellt werden. Eine Sonde, die voneinander verschiedene elektrische Signale abgibt, wird in der Leitung bewegt. An der Außenseite der Leitung wird eine Elektrode angeordnet. Die Elektrode kann Signale der Sonde empfangen. Ein Prozessor verarbeitet die Signale der Sonde mit Positionsdaten der Sonde, um ein festgestelltes Leck zu orten. Ein Leck wird geortet, wenn die von der Sonde abgegebenen Signale von der Elektrode mit identischer Stärke empfangen werden.

Um ein Leck festzustellen und zu orten, werden gemäß JP H03-125939 A Elektroden in Form von elektrischen Leitern zueinander parallel angeordnet. Einer der Leiter ist mit (+) verbunden. Der andere Leiter ist geerdet. Der mit (+) verbundene Leiter wird durch ein isolierendes Rohr geführt und nach dem Rohr mit (+) verbunden. An einer Leckstelle fließt Strom zwischen den Leitern. Um eine Leckstelle zu orten, wird ein Ende eines Leiters bewegt.

Bei US 5,081,422 A werden zum Feststellen und Orten von Leckstellen in Dächern oder Kellerwänden zwei zueinander parallele Leiter netzartig angeordnet. An die Leiter wird Spannung angelegt. Durch Scannen von durch eine Leckstelle verursachten Strom wird die Leckstelle geortet.

Der Erfindung liegt die Aufgabe zugrunde, ein Verfahren der eingangs genannten Gattung zur Verfügung zu stellen, mit welchen (unerwünschte) Anwesenheit von Wasser (Feuchtigkeit) an oder in beliebigen Gegenständen festgestellt werden kann.

Gelöst wird diese Aufgabe erfindungsgemäß mit einem Verfahren, welches die Merkmale von Anspruch 1 aufweist.

Bevorzugte und vorteilhafte Ausgestaltungen des erfindungsgemäßen Verfahrens sind Gegenstand der Unteransprüche.

Das erfindungsgemäße Verfahren erlaubt es, innerhalb und außerhalb eines Gegenstandes (unerwünschte) Anwesenheit von Wasser festzustellen, wobei es auch möglich ist, Leckstellen zu orten und zu qualifizieren, sodass Undichtheiten und Tropfverluste erfasst werden können. Auch bei Ölabscheiderbecken, erdverlegten Behältern, Schächten, Klärbecken etc. kann damit auch eine Dichtheitsprüfung durchgeführt werden.

Das erfindungsgemäße Verfahren kann zum Überwachen sowie zum Orten und Qualifizieren von erhöhter Feuchtigkeit in oder an Bauwerken, Undichtheiten und/oder Leckstellen angewendet werden.

In einem beispielhaften Anwendungsfall wird beim Ausführen des erfindungsgemäßen Verfahrens so gearbeitet, dass die Rohrwand einer Rohrleitung als Isolierschicht zwischen dem Inneren des Rohres und dem umgebenden Erdreich dient, sodass der Austritt von Wasser durch Leckstellen oder durch andere Undichtheiten mit Hilfe des erfindungsgemäßen Verfahrens erfasst werden kann. Sinngemäßes gilt auch für Folien von Schwimmteichen, Flachdächern (Teerpappe, Blech- oder Ziegeldächer), sodass auch hier das erfindungsgemäße Verfahren mit Vorteil angewendet werden kann.

In diesen Anwendungsfällen wird beim erfindungsgemäßen Verfahren eine Messung des elektrischen Stromes zwischen zwei Elektroden, an welche elektrische Spannung angelegt wird, durchgeführt. So ist es möglich, durch die Anwesenheit von Wasser bedingte oder erhöhte Leitfähigkeit (Elektrolyt) und wegen der angelegten Spannung fließenden elektrischen Strom oder gegenüber einem an sich fließenden (Grund-)Strom mit erhöhter Stromstärke fließenden Strom zu erfassen.

Wenn Rohrleitungen zu überwachen sind, um die Anwesenheit von unerwünschtem Wasser, das aus dem Rohr austritt, zu erfassen, kann eine Elektrode durch das Rohr gezogen werden. Dabei ist bevorzugt, dass als Elektrode eine Messsonde verwendet wird, die über eine zur Messsonde konzentrische und um diese herum angeordnete (Mess-)Elektrode verfügt. In diesem Fall wirkt eine Erdung als Gegenelektrode. Wenn bei dieser Anwendung des Verfahrens eine (durch Wasser verursachte) leitfähige Verbindung zwischen dem Rohrinneren und der Umgebung des Rohres vorliegt, strömt Strom, der einen Messsignalanstieg (fließender Strom) zur Folge hat. Diese Veränderung kann lokalisiert und als Undichtheit (Leck oder Schadstelle) in der Rohrleitung identifiziert werden.

Bei der Anwendung des erfindungsgemäßen Verfahrens an/in Gebäuden oder Flachdächern sowie Staumauern wird zwischen wenigstens zwei Elektroden gemessen. Sofern bei angelegter Messspannung der Messwert (Strom) bei Undichtheiten bzw. der Anwesenheit von Wasser ansteigt, ist - wenn zwei Elektrodenpaare verwendet werden - Undichtheit identifizierbar und kann geortet werden.

In einem anderen Anwendungsfall des erfindungsgemäßen Verfahrens werden mehr als zwei Elektrodenpaare verwendet, sodass eine Kreuzmessung zwischen unterschiedlichen Paaren von Elektroden stattfinden und ein Orten der Stelle, wo Wasser anwesend ist, erfolgen kann.

Bei dem erfindungsgemäßen Verfahren kann mit Gleichspannung oder mit Wechselspannung gearbeitet werden, also an das wenigstens eine Paar von Elektroden von der Messeinheit elektrische Gleichspannung oder eine elektrische Wechselspannung angelegt werden, sodass bei Anwesenheit von Wasser Gleichstrom bzw. Wechselstrom fließt.

Beim Ausführen des erfindungsgemäßen Verfahrens kann ein Messgerät verwendet werden, das Grundspannungen aus einer (hinterlegten) Datenbank automatisch übernimmt, wobei die Grundspannungen üblicherweise im Millivolt-Bereich liegen. Alternativ ist es möglich, bis 700 hz zu messen, die verwendete Grundspannung auf optimale Leitfähigkeit des Gegenstandes, an dem Wasser festgestellt werden soll, einzustellen, sodass eine erfolgreiche Messung stattfinden kann.

In einer Ausführungsform wird bei der Erfindung eine Datenbank mit unterschiedlichen Leitfähigkeiten hinterlegt, wobei aber auch die Möglichkeit besteht, in speziellen Anwendungsfällen zwischen zwei definierten Elektrodenpaaren mit definiertem Abstand und definierter Messspannung eine Kalibrierung für die Leitfähigkeit durchzuführen.

Die so ermittelten Daten der Leitfähigkeit werden für jeden Messabschnitt hinterlegt und gespeichert.

Das erfindungsgemäße Verfahren kann in unterschiedlichen Bereichen, z.B. in Gebäudeinstallationen, Innen- und Außenpools, Schwimmteichen, Gebäudeaufbauten, Flachdächern, Gebäudeteilen, Kellern, Bodenplatten, Betondecken-Holzleimbindern-Fertigteilhäusern usw., angewendet werden.

Die (Grund-)Leitfähigkeit der Werkstoffe, in welchen die Anwesenheit von (unerwünschtem) Wasser geprüft wird, wird beim Ausführen des erfindungsgemäßen Verfahrens berücksichtigt.

Beim Ausführen des erfindungsgemäßen Verfahrens können die Elektrode und die Gegenelektrode in unterschiedlicher Weise angeordnet werden, wobei die Gegenelektrode auch als Erdung ausgebildet sein kann.

In einer Variante des erfindungsgemäßen Verfahrens wird mit einer als Erdung ausgebildeten Elektrode (Erdungssensor) gearbeitet, was beispielsweise bei Rohrleitungen im Erdbereich, bei Gebäuden (Hausinstallationen, Flachdächern, Swimmingpools, Schwimmteichen usw.) von Vorteil ist. Bevorzugt ist das Anbringen des Erdungssensors im Erdbereich oder in/an einer Betondecke oder Straßenbrücke bei Flachdächern bzw. bei Gebäuden.

Alternativ kann das erfindungsgemäße Verfahren auf wassergefüllte Rohrleitungen angewendet werden. Bei dieser beispielhaften Ausführungsform werden zwei Elektroden durch das Innere des Rohres gezogen. Auf Grund der Länge der Kabel, an welchen die Elektroden angeschlossen sind, können Undichtheiten (Leckstellen) in der wassergefüllten Rohrleitung geortet werden. Durch die über die Kabellänge bekannte Lage der zwei im Inneren des Rohres angeordneten Elektroden kann festgestellt werden, wo sich eine Undichtheit befindet.

Das erfindungsgemäße Verfahren kann auch für die Leckortung in Hausinstallationen, Fußbodenheizungen und allgemein Wasserleitungen verwendet werden. Bei dem Anwendungsfall des erfindungsgemäßen Verfahrens an wassergefüllten Leitungen kann ein Erdungssensor mit einer Druckverschraubung an der zu überprüfenden Leitung installiert werden. So wird ein elektrischer Kontakt zum Medium hergestellt.

Bei Gebäuden oder Flachdächern oder im Inneren einer Rohrleitung kann bei der Erfindung zwischen einzelnen Paaren von Elektroden gemessen werden. Auch kann mit einer Handsonde am Fußboden oder an Wänden genau festgestellt werden, ob eine Undichtheit oder erhöhte Feuchtigkeit, beispielsweise in Holzleimbindern oder in Fertigteilhäusern, vorhanden ist.

Bei Festinstallationen, wenn erhöhte Feuchtigkeit (unerwünschte Anwesenheit von Wasser) festgestellt wird, kann, sofern mehr als ein Elektrodenpaar installiert ist und eine Kreuzmessung durchgeführt wird, eine genaue Ortung der Stelle der Feuchtigkeit oder Undichtheit erfolgen.

Bei dem erfindungsgemäßen Verfahren können relative Messwerte und absolute Messwerte dargestellt oder verglichen werden. Bei den Messwerten handelt es sich um Werte, die der Stromstärke des elektrischen Stromes, der zwischen Messsonden (= Elektroden) auf Grund der an die Elektroden angelegten Spannung fließt, entsprechen.

Wenn mit den bei dem erfindungsgemäßen Verfahren absoluten Messwerten gearbeitet wird, beziehen sich diese Messwerte auf die Stromstärke auf Grund des Auftretens von Wasser an/in dem überprüften Gegenstand. Dabei kann eine vom jeweiligen Werkstoff abhängige Obergrenze festgelegt werden. Wenn der Messwert, also die Stromstärke, die Obergrenze überschreitet, wird davon ausgegangen, dass (unerwünschtes) Wasser an/in dem Gegenstand, beispielsweise Wasser, das aus einer undichten Stelle (Leckstelle) ausgetreten ist, festgestellt worden ist.

Bei relativen Messwerten wird beispielswiese auf einen höchsten Messwert abgestellt, wobei bei Erreichen des höchsten Messwertes entschieden wird, ob eine Leckstelle, die Anwesenheit von Wasser verursacht, vorliegt. Beim Ausführen des erfindungsgemäßen Verfahrens mit relativen Messwerten spielen die Temperatur und die Luftfeuchtigkeit beim Ausführen des erfindungsgemäßen Verfahrens keine Rolle. Bei der Variante des erfindungsgemäßen Verfahrens, bei welcher mit relativen Messwerten gearbeitet wird, kann beispielsweise ein gegenüber dem Messwert (= Stromstärke) von an sich fließendem Strom ("Gegenstrom") erhöhter Messwert, der sich ergibt, weil wegen der Anwesenheit von unerwünschtem, z. B. aus einer Leckstelle stammendem zusätzlichem, Wasser Strom mit erhöhter Stromstärke fließt, herangezogen werden, um eine Leckstelle/unerwünschtes Wasser festzustellen.

Weitere Einzelheiten und Merkmale des erfindungsgemäßen Verfahrens ergeben sich aus der nachstehenden Beschreibung von in den Zeichnungen dargestellten Beispielen. Es zeigt:
- Fig. 1: die Anwendung des erfindungsgemäßen Verfahrens bei einem Swimmingpool mit Erdung,
- Fig. 2: die Anwendung des erfindungsgemäßen Verfahrens bei einem Swimmingpool ohne Erdung,
- Fig. 3: die Anwendung des erfindungsgemäßen Verfahrens an einem Flachdach mit Erdung,
- Fig. 4: die Anwendung des erfindungsgemäßen Verfahrens an einem Flachdach ohne Erdung,
- Fig. 5 bis 15: Anwendungsbeispiele des erfindungsgemäßen Verfahrens an unterschiedlichen Flachdächern,
- Fig. 16: ein Anwendungsbeispiel zum Orten eines Lecks in einem Flachdach,
- Fig. 17: die Anwendung des erfindungsgemäßen Verfahrens an einem Holzleimbinder,
- Fig. 18: die Anwendung des erfindungsgemäßen Verfahrens an einem Fertigteilhaus (nur im Keller oder Bodenplatte),
- Fig. 19: die Anwendung des erfindungsgemäßen Verfahrens an einem Fertigteilhaus mit Erdung,
- Fig. 20: die Anwendung des erfindungsgemäßen Verfahrens bei einer Gebäudeinstallation,
- Fig. 21: die Anwendung des erfindungsgemäßen Verfahrens bei einer anderen Gebäudeinstallation,
- Fig. 22: die Anwendung des erfindungsgemäßen Verfahrens bei einer Leitungsinstallation,
- Fig. 23: die Anwendung des erfindungsgemäßen Verfahrens zur Leckortung mit Hilfe einer Handsonde mit Erdung,
- Fig. 24: die Anwendung des erfindungsgemäßen Verfahrens zum Orten von Lecks in einer Rohrleitung mit Erdung,
- Fig. 25: die Anwendung des erfindungsgemäßen Verfahrens zum Orten von Lecks mit Hilfe einer Handsonde ohne Erdung,
- Fig. 26: die Anwendung des erfindungsgemäßen Verfahrens zum Orten von Lecks in Kanalschächten mit Erdung,
- Fig. 27: die Anwendung des erfindungsgemäßen Verfahrens zum Orten von Lecks in Ölabscheidern mit Erdung und
- Fig. 28: die Anwendung des erfindungsgemäßen Verfahrens zum Orten von Lecks in Klärbecken mit Erdung.

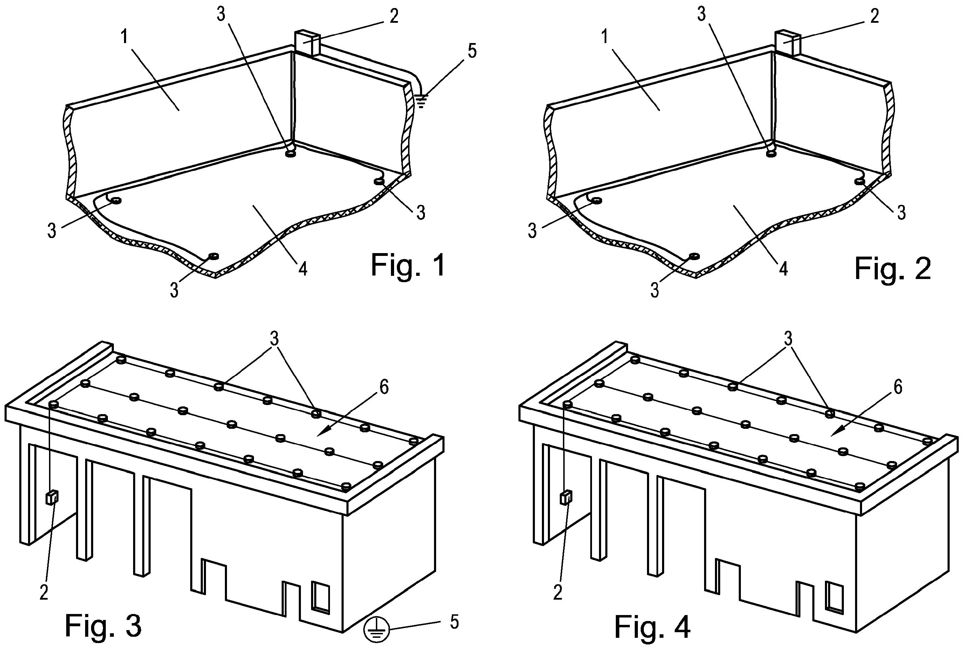

Bei dem in Fig. 1 gezeigten Beispiel zum Ausführen des erfindungsgemäßen Verfahrens an einem Swimmingpool wirkt das Becken 1 des Pools als Isolierschicht gegenüber dem umgebenden Erdreich. Am Rand des Beckens 1 des Swimmingpools ist eine Messeinheit 2 angeordnet, an die im gezeigten Ausführungsbeispiel vier Elektroden 3, die im Swimmingpool auf dessen Boden 4 aufliegend angeordnet sind, angeschlossen sind. Zusätzlich ist die Messeinheit 2 an eine Erdung 5 als Gegenelektrode angeschlossen.

Beim Ausführen des erfindungsgemäßen Verfahrens wird von der Messeinheit 2 zwischen jeder der vier Elektroden 3, die auf dem Boden 4 des Swimmingpools aufgelegt sind, und der Erdung 5 Spannung angelegt. Wenn zwischen wenigstens einer der vier Elektroden 3 und der als Gegenelektrode dienenden Erdung 5 Strom fließt, kann davon ausgegangen werden, dass im Bereich der jeweils betroffenen Elektrode 3 eine undichte Stelle vorliegt, da durch aus dem Swimmingpool austretendes Wasser eine (elektrolytisch) leitende Verbindung zwischen der Elektrode 3 und der Erdung 5 gegeben ist.

Fig. 2 zeigt die Anordnung von Fig. 1, jedoch ohne Erdung 5.

Bei der in Fig. 2 gezeigten Anordnung, die ohne Erdung 5 arbeitet, wird Spannung von der Messeinheit 2 an jeweils zwei der vier Elektroden 3 angelegt, sodass bei Anwesenheit von Feuchtigkeit zwischen den Elektroden 3 Strom fließt.

Fig. 3 zeigt schematisch an einem Flachdach 6 die Anordnung einer Messeinheit 2 und mehrerer Elektroden 3 sowie einer Erdung 5 als Gegenelektrode.

Bei dem in Fig. 3 gezeigten Ausführungsbeispiel sind an die Messeinheit 2 mehrere, auf dem Flachdach 6 angeordnete Elektroden 3 angeschlossen. Weiters ist an der Messeinheit 2 eine Erdung 5 angeschlossen. Von Messeinheit 2 wird zwischen den Elektroden 3 und der Erdung 5 elektrische Spannung angelegt, sodass beim Fließen von Strom festgestellt werden kann, ob und wo in dem Flachdach 6 wegen der Anwesenheit von Wasser eine undichte Stelle vorliegt.

Fig. 4 zeigt den Aufbau ähnlich Fig. 3, jedoch ohne Erdung 5.

Bei der erfindungsgemäßen Anwendung des erfindungsgemäßen Verfahrens gemäß Fig. 4 wird ähnlich gearbeitet wie bei der in Fig. 3 gezeigten Anwendung, wobei jedoch ohne Erdung 5 gearbeitet wird, wobei elektrische Spannung zwischen zwei Elektroden 3 - diese bilden dann ein Elektrodenpaar - angelegt wird.

Bei der Anwendung des erfindungsgemäßen Verfahrens zum Feststellen der Anwesenheit von Wasser im Bereich von Flachdächern 6 ist davon auszugehen, dass die Betondecke als Isolierschicht zwischen dem Inneren des Daches und der darunter liegenden Decke wirkt. Dabei wird die Leitfähigkeit zwischen zwei Paaren von Elektroden 3 oder mehr als zwei Paaren von Elektroden 3 gemessen. Wenn mehr als zwei Paare von Elektroden 3 angewendet werden, kann eine Kreuzmessung durchgeführt werden, sodass die Lage einer undichten Stelle in dem Flachdach 6 ermittelt (geortet) werden kann.

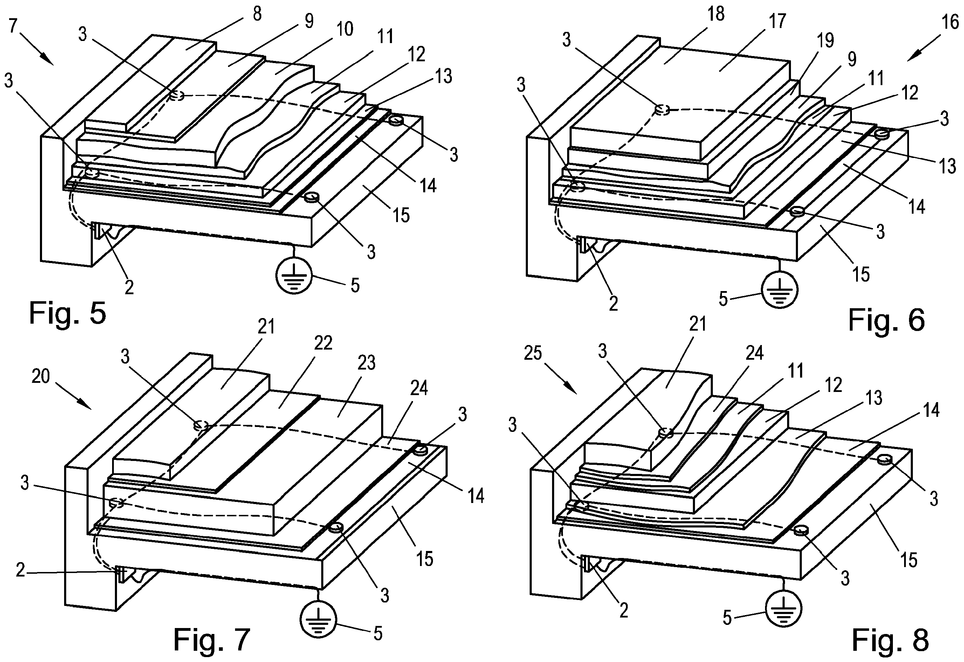

Fig. 5 zeigt die Anwendung des erfindungsgemäßen Verfahrens an einem belüfteten Kaltdach 7 mit Erdung 5, wobei der Aufbau des Daches von oben nach unten wie folgt ist:
Abdichtung 8
Trennschicht 9
Holzschalung 10
Trennschicht (diffusionsoffen) 11
Dämmung 12
Dampfsperre 13
Bitumenschicht 14
Elektroden 3
Untergrund / Dachkonstruktion 15
Erdung 5 (als Kabel dargestellt).

Fig. 6 zeigt die Anwendung des erfindungsgemäßen Verfahrens an einem begrünten Dach 16 mit Erdung, wobei der Aufbau des Daches von oben nach unten wie folgt ist:
Vegetationsschicht 17 und Begrünung 18
Dränschicht, Systemfilter & Wurzelschutzflies 19
Trenn-/Gleitschicht 9
Dachabdichtung
Trennschicht 11
Dämmung 12
Dampfsperre 13
Bitumenschicht 14
Elektroden 3
Untergrund / Dachkonstruktion 15
Erdung 5 (als Kabel dargestellt).

Fig. 7 zeigt die Anwendung des erfindungsgemäßen Verfahrens an einem Umkehrdach 20 (unbelüftet) mit Erdung, wobei der Aufbau des Daches von oben nach unten wie folgt ist:
Kiesschüttung 21
Dachflies 22
Hartschaumplatten 23
Dachabdichtung 24
Bitumenschicht 14
Elektroden 3
Untergrund / Dachkonstruktion 15
Erdung 5 (als Kabel dargestellt).

Fig. 8 zeigt die Anwendung des erfindungsgemäßen Verfahrens an einem Warmdach 25 (unbelüftet) mit Erdung, wobei der Aufbau des Daches von oben nach unten wie folgt ist:
Kiesschüttung 21
Abdichtung 24
Trennschicht 11
Wärmedämmung12
Dampfsperre 13
Bitumenschicht 14
Elektroden 3
Untergrund / Dachkonstruktion 15
Erdung 5 (als Kabel dargestellt).

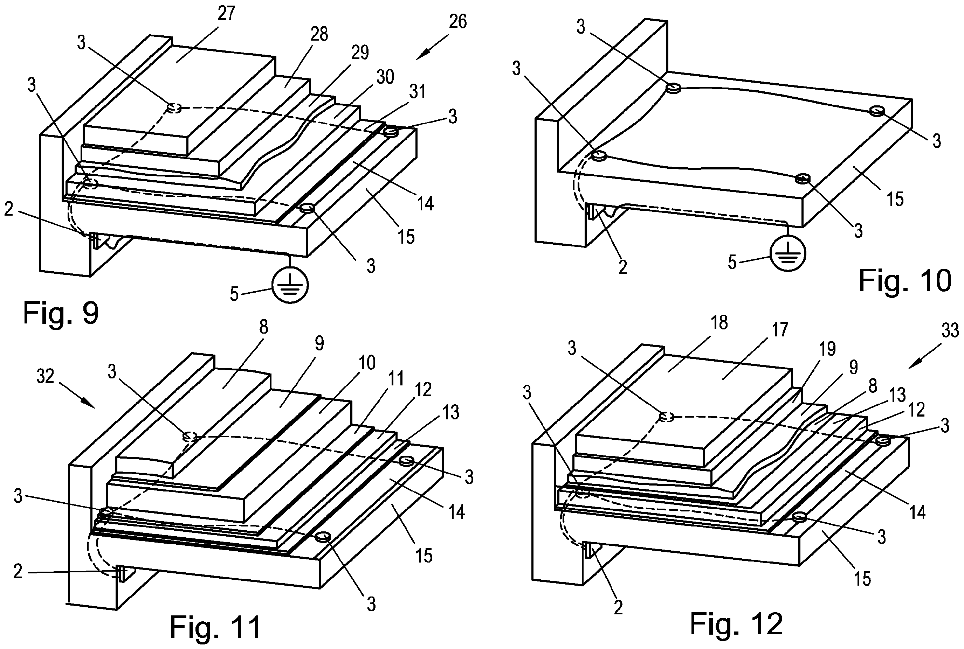

Fig. 9 zeigt die Anwendung des erfindungsgemäßen Verfahrens an einem befahrbaren Dach 26 mit Erdung, wobei der Aufbau des Daches von oben nach unten wie folgt ist:
Betonplatten / Asphalt 27
Bettung 28
Tragschicht 29
Drän- und Schutzschicht 19
Trenn- und Gleitschicht 9
Oberlage 30
Abdichtungslage 31
Bitumenschicht 14
Elektroden 3
Untergrund / Dachkonstruktion 15
Erdung 5 (als Kabel dargestellt).

Fig. 10 zeigt die Anwendung des erfindungsgemäßen Verfahrens an einem Flachdach 6, wobei an der Oberseite des Flachdaches 6 vier Elektroden 3 vorgesehen sind, die jeweils an die Messeinheit 2 angeschlossen sind. Weiters ist eine Erdung 5 vorgesehen, die ebenfalls an die Messeinheit 2 angeschlossen ist.

Fig. 11 zeigt die Anwendung des erfindungsgemäßen Verfahrens an einem belüfteten Kaltdach 32 ohne Erdung 5, wobei der Aufbau des Daches 32 von oben nach unten wie folgt ist:
Abdichtung 8
Trennschicht 9
Holzschalung 10
Trennschicht (diffusionsoffen) 11
Dämmung 12
Dampfsperre 13
Bitumenschicht 14
Elektroden 3
Untergrund / Dachkonstruktion 15.

Fig. 12 zeigt die Anwendung des erfindungsgemäßen Verfahrens an einem begrünten Dach 33 ohne Erdung 5, wobei der Aufbau des Daches 33 von oben nach unten wie folgt ist:
Vegetationsschicht 17 und Begrünung 18
Dränschicht, Systemfilter & Wurzelschutzflies 19
Trenn-/Gleitschicht 9
Dachabdichtung 8
Trennschicht 11
Dämmung 12
Dampfsperre 13
Bitumenschicht 14
Elektroden 3
Untergrund / Dachkonstruktion 15.

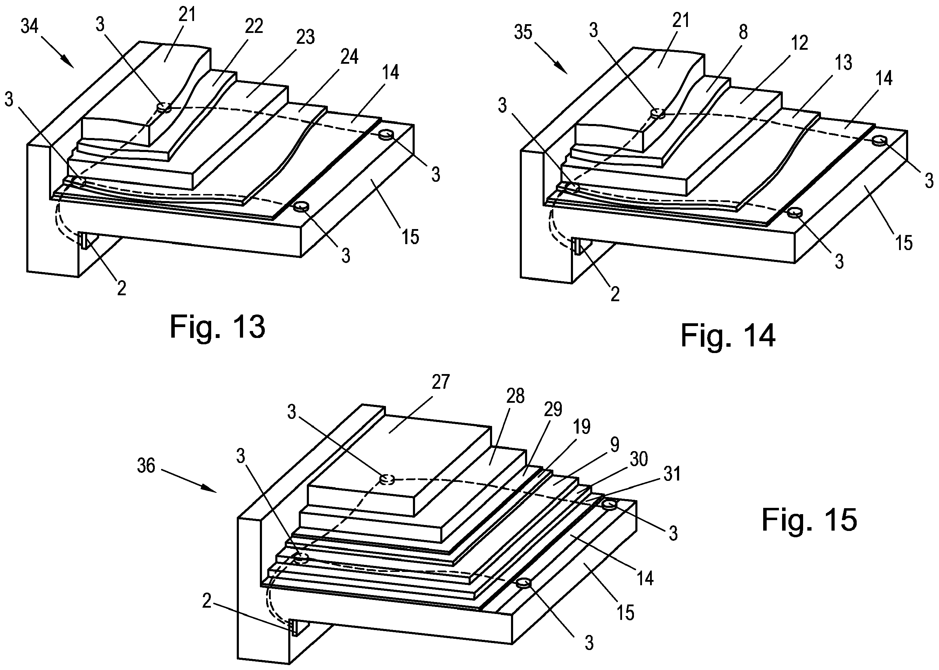

Fig. 13 zeigt die Anwendung des erfindungsgemäßen Verfahrens an einem Umkehrdach 34 (unbelüftet) ohne Erdung, wobei der Aufbau des Daches 34 von oben nach unten wie folgt ist:
Kiesschüttung 21
Dachflies 22
Hartschaumplatten 23
Dachabdichtung 24
Bitumenschicht 14
Elektroden 3
Untergrund / Dachkonstruktion 15.

Fig. 14 zeigt die Anwendung des erfindungsgemäßen Verfahrens an einem Warmdach 35 (unbelüftet) ohne Erdung, wobei der Aufbau des Daches 35 von oben nach unten wie folgt ist:
Kiesschüttung 21
Abdichtung 8
Trennschicht 9
Wärmedämmung 12
Dampfsperre 13
Bitumenschicht 14
Elektroden 3
Untergrund / Dachkonstruktion 15.

Fig. 15 zeigt die Anwendung des erfindungsgemäßen Verfahrens an einem befahrbaren Dach 36 ohne Erdung, wobei der Aufbau des Daches 36 von oben nach unten wie folgt ist:
Betonplatten / Asphalt 27
Bettung 28
Tragschicht 29
Drän- und Schutzschicht 19
Trenn- und Gleitschicht 9
Oberlage 30
Abdichtungslage 31
Bitumenschicht 14
Elektroden 3
Untergrund / Dachkonstruktion 15.

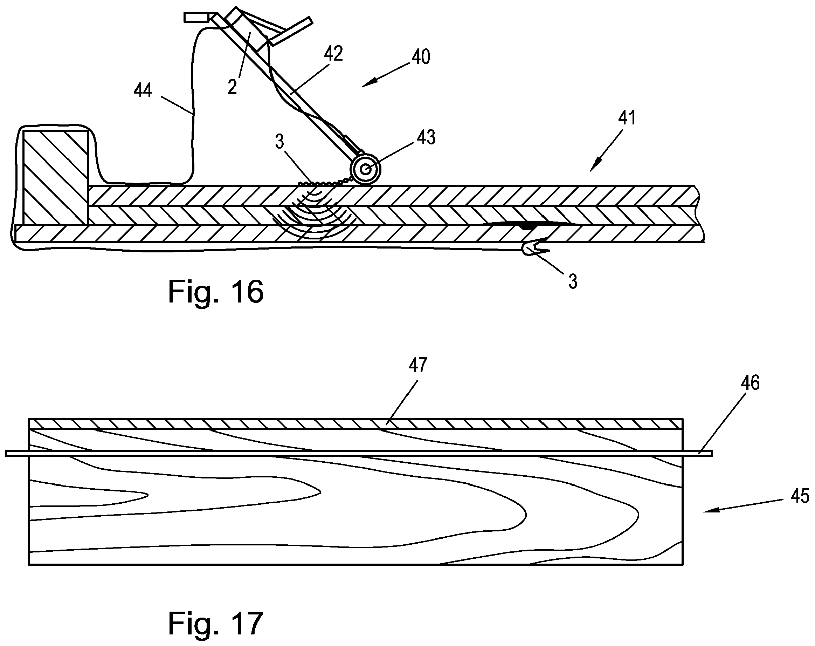

In Fig. 16 ist schematisch in Anwendung eines mobilen, mit einer Elektrode 3 ausgestatteten Messgerätes 40 für die Leckortung auf einem Flachdach 41 gezeigt. Die Elektrode 3 ist an einem Rahmen 42 mit Rädern 43 montiert und gleitet über die Oberseite des Flachdaches 41, wobei die die Spannung liefernde Messeinheit 2 an dem Rahmen 42 montiert ist. Von der an dem Rahmen 42 montierten Messeinheit 2 führt eine Leitung 44 zu der unterhalb des Daches angebrachten Gegenelektrode 3. Bei unerwünschter Feuchtigkeit (in Fig. 16 rechts angedeutet) wird durch einen Anstieg der Stromstärke (wegen erhöhter Leitfähigkeit) die undichte Stelle festgestellt.

Fig. 17 zeigt die Anwendung des erfindungsgemäßen Verfahrens bei einem Holzleimbinder 45. Damit das erfindungsgemäße Verfahren durchgeführt werden kann, ist in den Holzleimbinder 45 ein elektrisch leitender Messdraht 46 (Stahldraht) integriert. An der Oberseite des Holzleimbinders 45 ist ein elektrisch leitendes Band 47 (Stahlband) befestigt (angeklebt oder verschraubt). Von der an das Stahlband 47 und den Messdraht 46 angeschlossenen Messeinheit 2 wird zum Feststellen von Wasser (Feuchtigkeit) in dem Leimbinder 45 elektrische Spannung angelegt. Sobald Strom fließt und dessen Stromstärke und an der Messeinheit 2 als Messwert angezeigt wird, kann auf die Anwesenheit von Wasser in dem Leimbinder 45 geschlossen werden.

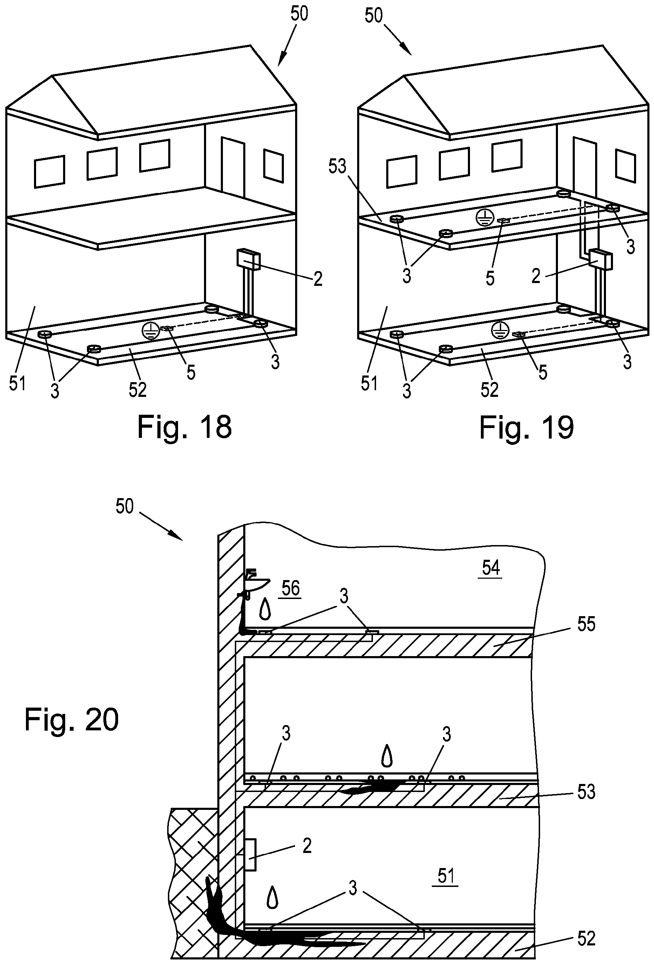

Fig. 18 zeigt die Anwendung eines erfindungsgemäßen Verfahrens im Bereich eines Kellers 51 eines Fertigteilhauses 50, wobei im Beispiel mehrere Elektroden 3 auf der Bodenplatte 52 angeordnet sind und unterhalb der Bodenplatte 52 eine Erdung 5 angebracht ist. Sowohl die Elektroden 3 als auch die Erdung 5 sind an die Messeinheit 2 angeschlossen, sodass von dieser zwischen den Elektroden 3 und der Erdung 5 Spannung angelegt werden kann. Bei Anwesenheit von (unerwünschtem) Wasser wird zwischen den Elektroden 3 und der Erdung 5 Strom fließen, sodass aufgrund des fließenden Stroms, dessen Stärke auf der Messeinheit 2 als Messwert angezeigt wird, auf die Anwesenheit von Wasser geschlossen werden kann.

Fig. 19 zeigt eine Ergänzung des in Fig. 18 gezeigten Ausführungsbeispiels, wobei nicht nur im Keller 51, sondern im gesamten Haus 50 im Bereich einer Zwischendecke 53 auf die Anwesenheit von Wasser geprüft wird.

In Fig. 20 ist der in Fig. 19 gezeigte Aufbau für die Anwendung des erfindungsgemäßen Verfahrens für das gesamte Haus 50 schematisch dargestellt. An der Bodenplatte 52 des Kellerbodens sind zwei Elektroden 3 angeordnet. Im Bereich der Zwischendecke 53 sind zwei weitere Elektroden 3 angeordnet. Schließlich sind zwei weitere Elektroden 3 im Bereich des Daches 54 und in einer weiteren Decke 55 angeordnet. Alle diese Elektroden 3 sind mit der Messeinheit 2 verbunden, wobei durch die Darstellung von "Tropfen" im Bereich des Kellers 51, im Bereich der Kellerdecke (= Zwischendecke 54) und im Bereich eines Badezimmers 56 die mit Hilfe des erfindungsgemäßen Verfahrens feststellbare Anwesenheit von Wasser symbolisiert dargestellt ist.

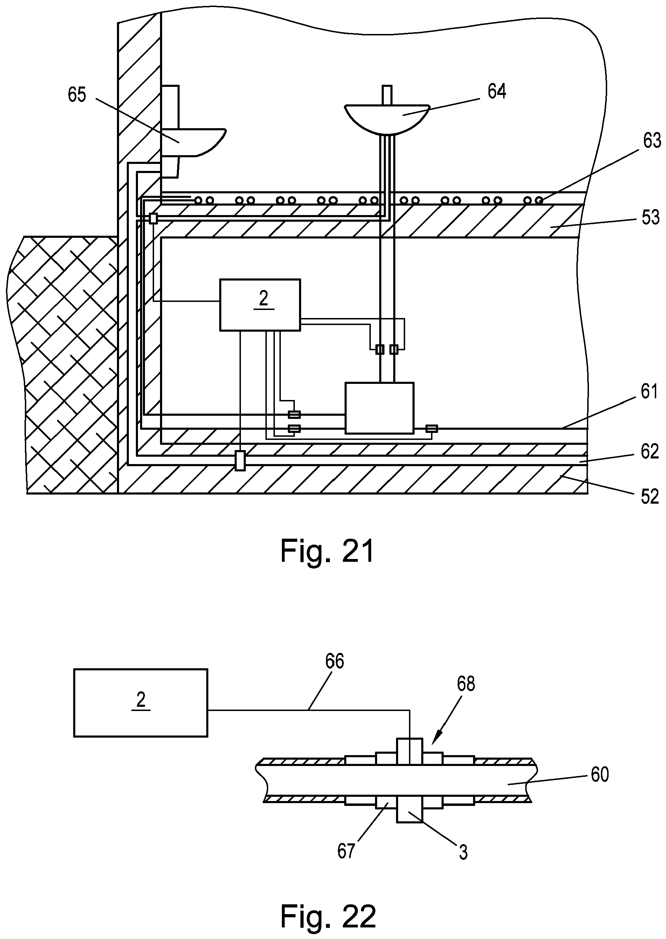

In Fig. 21 und 22 ist der schematische Aufbau einer Anordnung zum Ausführen des erfindungsgemäßen Verfahrens an Rohrleitungen 60 in Gebäudeinstallationen, um diese zu überwachen, dargestellt. Dabei wird davon ausgegangen, dass normalerweise der Bodenestrich als Isolierschicht zwischen unterschiedlichen Elektroden 3 in einer darunterliegenden Decke 53 und dem Inneren des Raumes wirkt. Vorgesehen sind in diesem Fall fest installierte Sensoren in Form von Elektroden 3, wie dies schematisch in Fig. 22 dargestellt ist. So kann nicht nur die Wasserzuleitung 61 und die Abwasserleitung 62, sondern auch eine Fußbodenheizung 63 und/oder die Zufuhr von Warmwasser oder Kaltwasser zu einem Waschbecken 64 und/oder einem WC 65 überwacht und kontrolliert werden, um festzustellen, ob außerhalb der Leitungen Wasser anwesend ist und daher wenigstens eine Leckstelle vorliegt.

In Fig. 22 ist gezeigt, wie die Messeinheit 2 über eine (Elektronik-)Leitung 66 mit einer an der Rohrleitung 60 angeordneten Elektrode (Messsonde) 3 verbunden ist. Die Elektrode 3 ist mit Hilfe eines Adapters 67 an der Rohrleitung 60 befestigt, wobei im Bereich der Elektrode 3 in der Rohrleitung 60 eine Mess-Öffnung 68 vorgesehen ist.

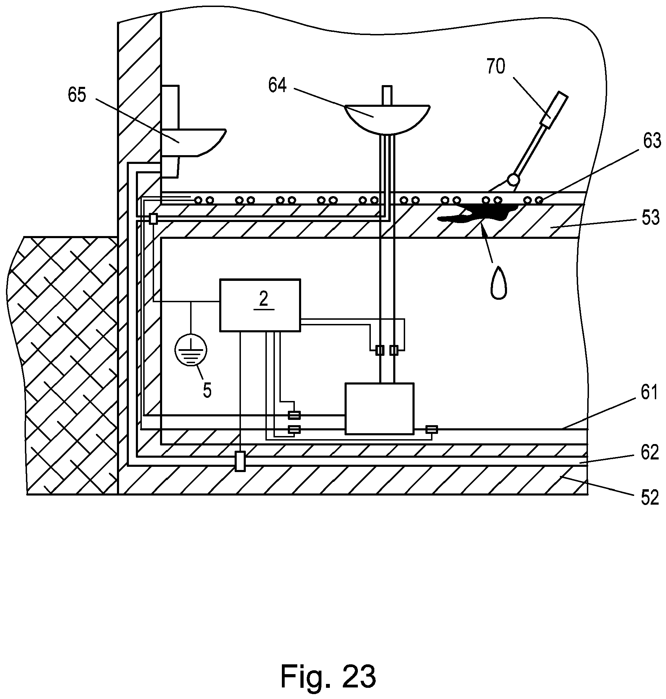

Bei der in Fig. 23 gezeigten Anordnung zum Durchführen des erfindungsgemäßen Verfahrens wird gezeigt, wie mit Hilfe einer von Hand geführten Sonde 70 (Leckortungssonde als Elektrode 3) eine undichte Stelle in einer Fußbodenheizung 63 geortet werden kann. Dabei wird davon ausgegangen, dass die Messeinheit 2 nicht nur geerdet ist, sondern auch - so wie in Fig. 23 unten angedeutet - mit der Abwasserleitung 62 (beispielsweise wie in Fig. 22 gezeigt) verbunden ist.

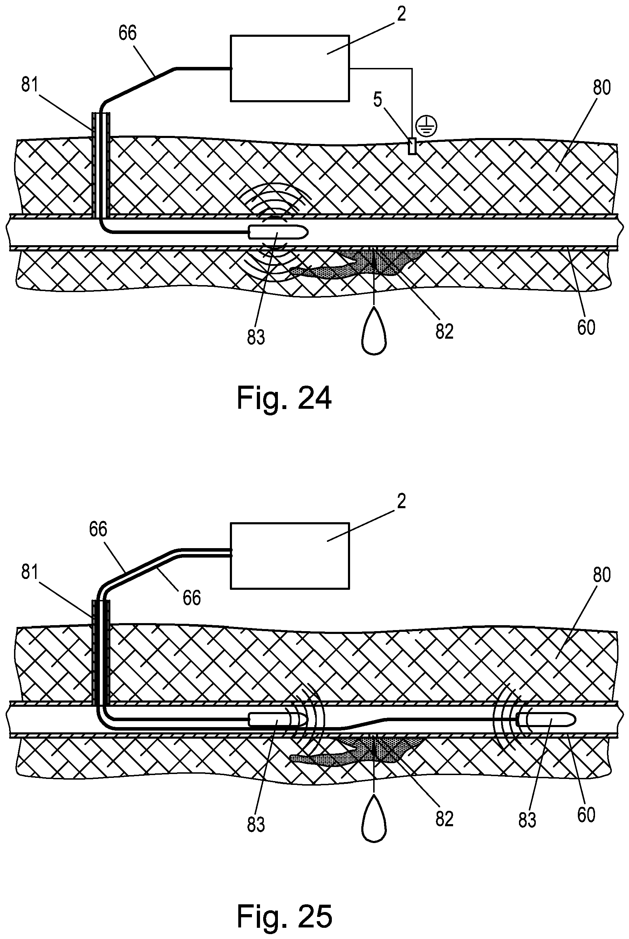

Bei der in Fig. 24 gezeigten Ausführungsform des erfindungsgemäßen Verfahrens wird eine Leckstelle 82 in einer im Erdreich 80 verlegten Rohrleitung 60 geortet. Dazu wird über eine (bereits vorhandene) Anschlussstelle 81 eine von der Messeinheit 2 ausgehende Leitung 66, an deren freiem Ende eine Sonde 83 mit Elektroden 3 angeordnet ist, eingeführt. Die Messeinheit 2 ist weiters mit einer in üblicher Weise ausgeführten Erdung 5 verbunden.

Durch Bewegen der Sonde 83 in der Rohrleitung 60 - dies kann mit Hilfe der Leitung 66, an welche die Sonde 83 angeschlossen ist, erfolgen - wird die Sonde 83 durch die Rohrleitung 60 bewegt. Eine Leckstelle 82 kann auf Grund von elektrischem Strom, der zwischen der Elektrode 3 in der Sonde 83 und der Erdung 5 wegen der durch die Anwesenheit von Wasser bedingten erhöhten Leitfähigkeit fließt, in der Rohrleitung 60 erfasst werden. Das Orten der Leckstelle kann durch Messen der Länge der Leitung 66 (des Kabels), an dem die die Elektrode 3 aufweisende Sonde 83 angebracht ist, erfolgen.

Bei der in Fig. 25 gezeigten Variante einer Anordnung zum Ausführen des erfindungsgemäßen Verfahrens zum Orten von Leckstellen 82 in einer Rohrleitung 60 wird ohne Erdung 5 gearbeitet. In diesem Fall sind zwei Sonden 83 mit Elektroden 3 über gesonderte Leitungen 66 an die Messeinheit 2 angeschlossen. Wenn sich die Sonden 83 im Bereich einer Leckstelle 82, wie in Fig. 25 angedeutet, befinden, fließt zwischen den von den in den Sonden 83 aufgenommenen Elektroden 3 elektrischer Strom, der gegenüber dem an sich wegen der Anwesenheit von Wasser in der Rohrleitung 60 zwischen den Elektroden 3 fließendem Strom ("Grundstrom") erhöht ist. Grund der Erhöhung der Stromstärke (= Messwert) im Bereich der Leckstelle 82 ist das durch die Leckstelle 82 in das Erdreich austretende/ausgetretene Wasser. Auch bei diesem Ausführungsbeispiel kann das Orten der Leckstelle 82 durch Ermitteln der Länge der Leitungen 66 (Kabel), an welchen die Sonden 83 angeschlossen und mit einer Messeinheit 2 verbunden sind, erfolgen.

Bei allen Anwendungsbeispielen des erfindungsgemäßen Verfahrens ist es vorteilhaft, aber nicht zwingend, wenn auch die beim Feststellen von Wasser herrschende Temperatur und die Luftfeuchtigkeit berücksichtigt werden, um Fehlinterpretationen beim Feststellen der Anwesenheit von (unerwünschtem) Wasser auszuschließen.

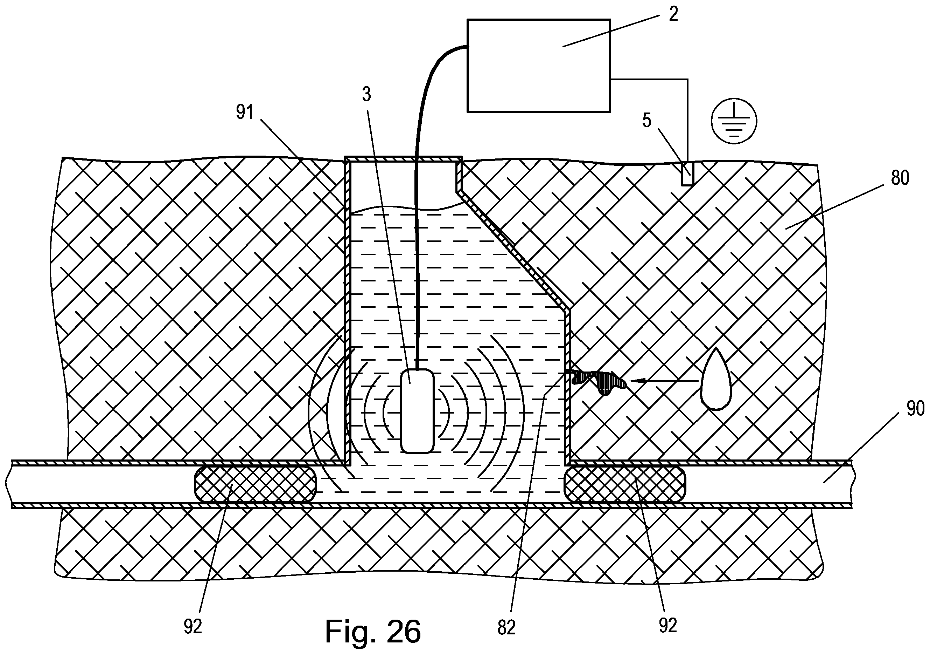

In Fig. 26 ist ein Kanal 90, der im Erdreich 80 verlegt ist und der einen Kanalschacht 91 besitzt, gezeigt. Der Kanalschacht 91 ist für das Durchführen des erfindungsgemäßen Verfahrens gegenüber dem eigentlichen Kanal 90 durch (zwei) Dichtkissen 92 abgedichtet. So kann der Kanalschacht 91 mit Wasser gefüllt werden. Im gezeigten Beispiel kann aus einer Leckstelle 82 in der Wand des Kanalschachtes 91 austretendes Wasser festgestellt werden. Hierzu ist in den Kanalschacht 91 eine Elektrode 3 eingeführt, die über eine Elektronikleitung 66 mit einer Messeinheit 2 verbunden ist. An die Messeinheit 2 ist elektrisch leitend auch eine als Erdung ausgebildete Gegenelektrode 5 angeschlossen. Wenn auf Grund der an die Elektrode 3 und die Gegenelektrode 5 von der Messeinheit 2 angelegten elektrischen Spannung Strom fließt, dessen Stromstärke von der Messeinheit 2 als Messwert erfasst wird, ist die Leckstelle 82 in dem Kanalschacht 91 auf Grund von aus der Leckstelle 82 ausgetretenem Wasser festgestellt.

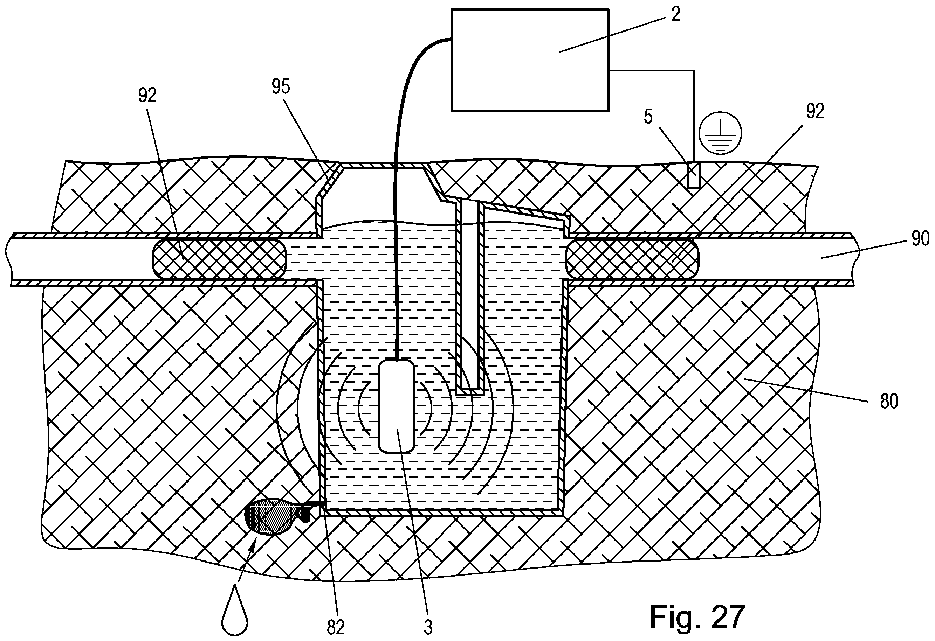

Bei dem in Fig. 27 gezeigten Anwendungsbeispiel des erfindungsgemäßen Verfahrens wird eine Leckstelle 82 in einem Ölabscheider 95 geortet. Auch bei dem Beispiel der Fig. 27 ist der Ölabscheider 95 gegenüber dem Kanal 90 durch zwei Dichtkissen 92 abgedichtet. Die Stärke von zwischen der Elektrode 3 und der als Erdung ausgebildeten Gegenelektrode 5 fließendem elektrischen Strom wird von der Messeinheit 2 als Messwert erfasst und zeigt an, dass aus der Leckstelle 82 im Mantel des Ölabscheiders 95 Wasser ausgetreten ist.

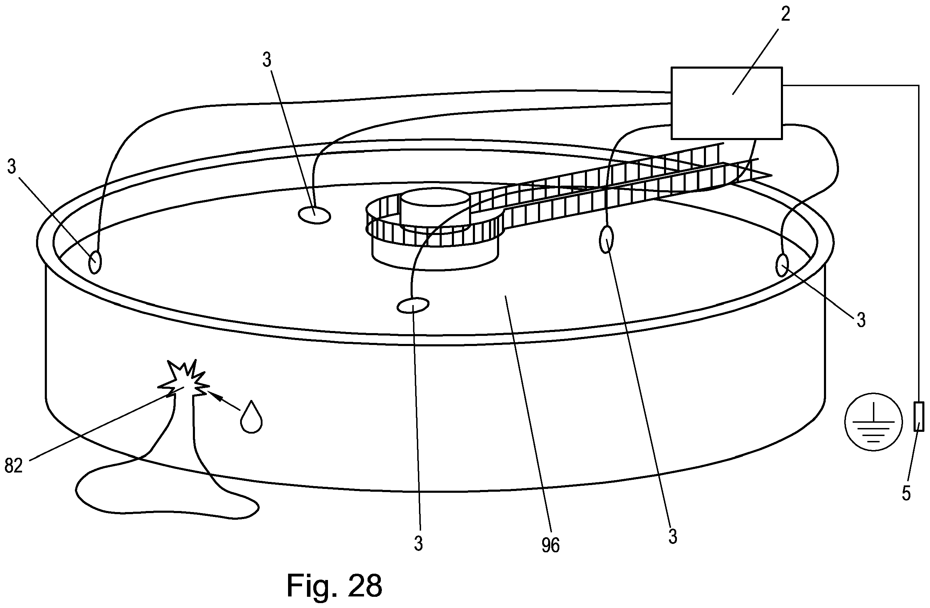

Das erfindungsgemäße Verfahren kann auch dazu dienen, die Dichtheit eines (Abwasser-)Klärbeckens 96 zu prüfen und zu überwachen. Das zeigt Fig. 28. Wenn zwischen einer der Elektroden 3 und der als Erdung ausgebildeten Gegenelektrode 5 auf Grund von (gleichzeitig oder nacheinander) an eine oder mehrere der Elektroden 3 von der Messeinheit 2 angelegter elektrischer Spannung Strom fließt, wird die Anwesenheit von Wasser festgestellt. Wegen der Verwendung einer Mehrzahl von an die Messeinheit 2 angeschlossener Elektroden 3 kann auch festgestellt werden, wo eine Leckstelle 82 des Klärbeckens 96 liegt.

Zusammenfassend kann ein Ausführungsbeispiel der Erfindung wie folgt beschrieben werden:
Bei einem Verfahren zum Feststellen der Anwesenheit von Wasser oder zusätzlichem Wasser, das wegen einer Undichtigkeit vorliegt, werden folgende Schritte ausgeführt:
- Anbringen von wenigstens einem Paar von Elektroden 3, 5 an/in einem Gegenstand, an/in dem Anwesenheit von Wasser festzustellen ist,
- Anlegen einer elektrischen Spannung zwischen den Elektroden 3, 5,
- Prüfen, ob zwischen den Elektroden 3, 5 elektrischer Strom oder gegenüber einem Grundstrom erhöhter elektrischer Strom fließt und
- bei fließendem Strom Feststellen der Anwesenheit von Wasser.

Beim Durchführen des Verfahrens werden wenigstens zwei Elektroden (3, 5) verwendet, wobei eine Elektrode (5) eine Erdung sein kann. Die Elektroden (3, 5) sind mit Abstand voneinander angeordnet. An die Elektroden (3, 5) wird von einem Gerät (2) Gleich- oder Wechselspannung angelegt. Das Gerät 2 erfasst einen der Stärke des zwischen den Elektroden 3, 5 fließenden Stroms entsprechenden Messwert.

## Patentansprüche

1. Verfahren zum Feststellen der Anwesenheit von Wasser, bei dem folgende Schritte durchgeführt werden:
- Anbringen von wenigstens einem Paar von Elektroden an/in einem Gegenstand, an/in dem Anwesenheit von Wasser festzustellen ist,
- Anlegen einer elektrischen Spannung zwischen den Elektroden,
- Prüfen, ob zwischen den Elektroden elektrischer Strom oder gegenüber einem Grundstrom erhöhter elektrischer Strom fließt und
- bei fließendem Strom Feststellen der Anwesenheit von Wasser,
**dadurch gekennzeichnet, dass** beim Feststellen von Wasser auf Grund von zwischen den Elektroden fließendem elektrischen Strom die dem Gegenstand eigene Leitfähigkeit des Gegenstandes berücksichtigt wird.

2. Verfahren nach Anspruch 1, **dadurch gekennzeichnet, dass** die Elektroden mit Abstand voneinander angeordnet werden.

3. Verfahren nach Anspruch 1 oder 2, **dadurch gekennzeichnet, dass** an die Elektroden ein Gerät zum Erzeugen der an die Elektroden anzulegenden Spannung und zum Messen von zwischen den Elektroden fließenden elektrischen Stromes angeschlossen wird.

4. Verfahren nach einem der Ansprüche 1 bis 3, **dadurch gekennzeichnet, dass** eine der Elektroden an dem Gegenstand angeordnet wird und dass als zweite Elektrode, die als Gegenelektrode dient, eine Erdung verwendet wird.

5. Verfahren nach einem der Ansprüche 1 bis 4, **dadurch gekennzeichnet, dass** der Gegenstand, bei dem die Anwesenheit von Wasser festgestellt wird, ausgewählt ist aus der Gruppe umfassend Bauwerksteil, wie Wand, Decke, Boden, Kellerboden, Dach, Flachdach, Schwimmbecken, Schwimmteich, Staumauer, Rohrleitung, Hausinstallationsleitung, Fußbodenheizung, Leitung in einem Heizungssystem, Abwasserleitung, Trinkwasserleitung, Warmwasserleitung und Holzleimbinder, Schacht, Ölabscheiderbecken, Kanal-Schacht, erdverlegte Behälter und Klärbecken.

6. Verfahren nach einem der Ansprüche 1 bis 5, **dadurch gekennzeichnet, dass** mehr als zwei Paare von Elektroden verwendet werden und dass den Paaren eine Erdung als gemeinsame Gegenelektrode zugeordnet wird.

7. Verfahren nach einem der Ansprüche 1 bis 6, **dadurch gekennzeichnet, dass** mehr als zwei Paare Elektroden verwendet werden und dass elektrische Spannung abwechselnd an Elektroden der Paare angelegt wird.

8. Verfahren nach einem der Ansprüche 1 bis 7, **dadurch gekennzeichnet, dass** beim Feststellen von Wasser, das aus einem als Rohrleitung ausgebildeten Gegenstand austritt, um Leckstellen zu finden, mehrere miteinander verbundene Elektroden durch die Rohrleitung bewegt werden und dass an der Außenseite der Rohrleitung eine Elektrode als Gegenelektrode angebracht wird oder dass eine Erdung als Gegenelektrode verwendet wird.

9. Verfahren nach einem der Ansprüche 1 bis 7, **dadurch gekennzeichnet, dass** zwei gesondert an das Gerät zum Erzeugen von Spannung angeschlossene, von einander Abstand aufweisende Elektroden verwendet werden, die durch eine Rohrleitung bewegt, insbesondere gezogen, werden.

10. Verfahren nach Anspruch 8 oder 9, **dadurch gekennzeichnet, dass** eine gefundene Leckstelle durch Ermitteln der Länge einer die in der Rohrleitung bewegten Elektroden verbindenden Leitung geortet wird.

11. Verfahren nach Anspruch 8 oder 9, **dadurch gekennzeichnet, dass** die im Inneren der Rohrleitung bewegten Elektroden miteinander elektrisch leitend verbunden sind.

12. Verfahren nach einem der Ansprüche 1 bis 11, **dadurch gekennzeichnet, dass** beim Feststellen von Wasser auf Grund von zwischen den Elektroden fließendem elektrischen Strom die Luftfeuchtigkeit und/oder die Temperatur des Gegenstandes berücksichtigt wird.

13. Verfahren nach Anspruch 12, **dadurch gekennzeichnet, dass** in einer Datenbank gespeicherte Leitfähigkeiten herangezogen werden.

14. Verfahren nach Anspruch 12 oder 13, **dadurch gekennzeichnet, dass** die Leitfähigkeit durch Erfassen des elektrischen Stromes, der zwischen zwei in definiertem Abstand voneinander angeordneten Elektroden bei definierter, an die Elektroden angelegter Spannung fließt, ermittelt wird.

15. Verfahren nach einem der Ansprüche 1 bis 14, **dadurch gekennzeichnet, dass** beim Feststellen von Wasser in einem Holzleimbinder eine Elektrode als elektrisch leitendes Band im Inneren des Holzleimbinder und eine Elektrode als Band an der Außenseite des Holzleimbinders angebracht wird.

16. Verfahren nach einem der Ansprüche 1 bis 15, **dadurch gekennzeichnet, dass** wenigstens eine Elektrode, die an einer mit der Hand geführten Handsonde angeordnet ist, verwendet wird.
